# EUROPEAN PATENT APPLICATION

(11) **EP 3 168 142 A1**
(43) Date of publication of application: **17.05.2017**
(21) Application number: 16196785.6
(22) Date of filing: 02.11.2016
(51) Int. Cl.: B64C 11/24, B64C 11/26, B64C 27/473, F01D 5/14, F04D 29/32, F04D 29/38, F03D 1/06, B63H 1/26, B64C 11/20

(54) **AIRFOIL WITH ENERGY ABSORBING EDGE GUARD**

(30) Priority: 09.11.2015 US 201514935534
(71) Applicant: General Electric Company, Schenectady, NY 12345 (US)
(72) Inventor: KRAY, Nicholas Joseph, West Chester, OH 45069 (US); ALBRECHT, JR. Richard William, Cincinnati, OH 45215 (US)
(74) Representative: Pöpper, Evamaria

(57) **Abstract**

An edge guard apparatus (30) for an airfoil includes: a body (32) having a nose (36) with spaced-apart first and second wings (38, 40) extending therefrom, the body (32) defining a cavity (44) between the first and second wings (38, 40); and an energy absorbing structure (34) disposed in the cavity (44).

## Description

### BACKGROUND OF THE INVENTION

This invention relates generally to airfoil protective leading edge guards and in particular to fan blade leading edge guards with energy absorbing properties.

Fan blades and other structures used in turbine engine applications are susceptible to foreign object impact damage, for example during bird ingestion events. Blades made of composite materials such as graphite fiber reinforced epoxy are attractive due to their high overall specific strength and stiffness. However, graphite composites are particularly prone to brittle fracture and delamination during foreign object impacts due to their low ductility. Blade leading edges, trailing edges, and tips are particularly sensitive because of the generally lower thickness in these areas and the well-known susceptibility of laminated composites to free edge delamination. In addition blade geometry and high rotational speeds relative to aircraft speeds cause ingested objects to strike the blade near the leading edge.

Metallic guards bonded to the leading edges of composite fan blades are known to provide impact damage protection.

One problem with prior art leading edge guards is that they are generally both thin and made of high-density alloys. These requirements make manufacture of leading edge guards difficult with conventional methods such as machining or hot creep forming.

Another problem with prior art fan blade leading edge guards is that they often have complex shapes which are complex and expensive to manufacture.

### BRIEF SUMMARY OF THE INVENTION

At least one of the above-noted problems is addressed by an airfoil incorporating an edge guard with energy absorbing elements disposed therein.

According to one aspect of the technology described herein, an edge guard apparatus for an airfoil includes: a body having a nose with spaced-apart first and second wings extending therefrom, the body defining a cavity between the first and second wings; and an energy absorbing structure disposed in the cavity.

According to another aspect of the technology described herein, an airfoil apparatus includes: an airfoil having convex and concave sides extending between a leading edge and a trailing edge; a body having a nose with spaced-apart first and second wings extending therefrom, the body defining, in cooperation with the leading edge of the airfoil, a cavity; and an energy absorbing structure disposed in the cavity.

### BRIEF DESCRIPTION OF THE DRAWINGS

The invention may be best understood by reference to the following description taken in conjunction with the accompanying drawing figures in which:
FIG. 1 is a view of a gas turbine engine fan blade incorporating a leading edge guard;
FIG. 2 is a cross-sectional view taken along lines 2-2 of FIG. 1;
FIG. 3 is an elevational view of a piece of sheet stock material; and
FIG. 4 is a partially-sectioned view of a portion of an airfoil with a leading edge guard.

### DETAILED DESCRIPTION OF THE INVENTION

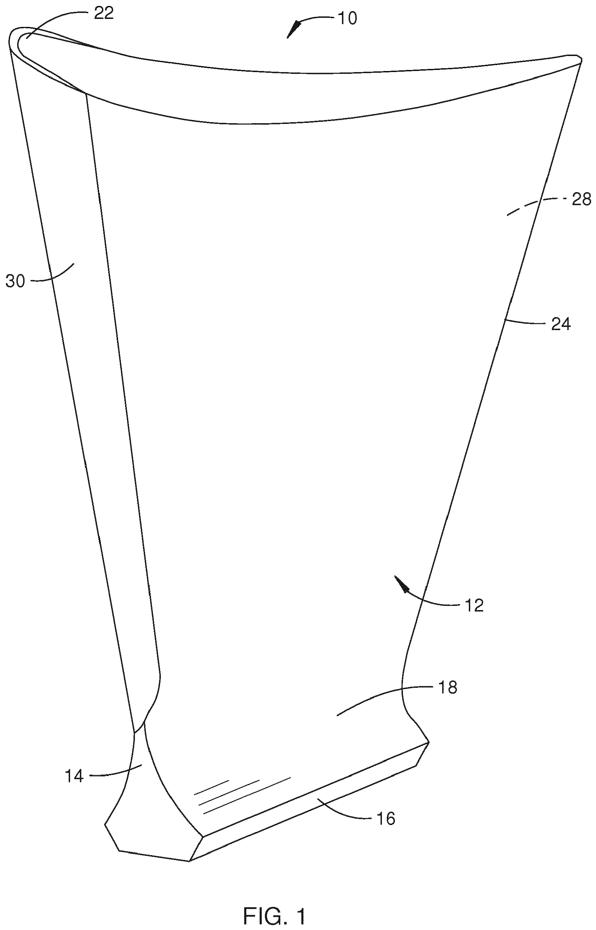

Referring to the drawings wherein identical reference numerals denote the same elements throughout the various views, FIG. 1 depicts an exemplary fan blade 10 for a gas turbine engine. The fan blade 10 includes an airfoil 12, shank 14, and dovetail 16. The airfoil 12 extends between a root 18 and a tip 20, and has a leading edge 22 and a trailing edge 24. Opposed convex and concave sides 26 and 28, respectively, extend between the leading edge 22 and the trailing edge 24. The fan blade 10 is merely an example; the principles of the present invention are applicable to other kinds of structures requiring impact protection.

The fan blade 10 may be made from one or more metal alloys, or from a nonmetallic material, such as a composite system with an epoxy matrix and carbon fiber reinforcement.

The airfoil 12 has a leading edge guard 30 attached to the leading edge 22. The leading edge guard 30 helps provide the fan blade 10 with additional impact resistance, erosion resistance and improved resistance of the composite structure to delamination. In particular, the leading edge guard 30 has energy absorbing properties.

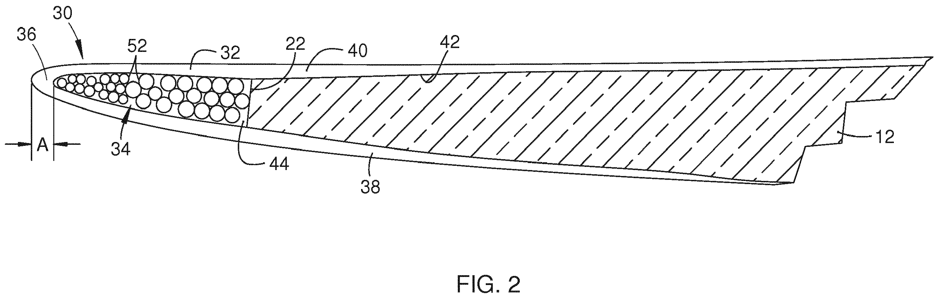

As best seen in FIG. 2, the leading edge guard 30 comprises a body 32 and an energy absorbing structure 34. The body 32 includes a nose 36 with a pair of wings 38 and 40 extending aft therefrom. The wings 38 and 40 taper in thickness as they extend away from the nose 36. Exterior surfaces of the nose 36 and wings 38 and 40 collectively define an exterior surface of the body 32. The shape and dimensions of the exterior surface are selected to act as an aerodynamic extension of the airfoil 12. The body 32 may be attached to the airfoil 12 with a known type of adhesive.

Interior surfaces of the nose 36 and wings 38 and 40 collectively define an interior surface 42 of the body 32. The shape and dimensions of the interior surface 42 are selected to closely fit the exterior of the airfoil 12, and to define a cavity 44 in cooperation with the leading edge 22 of the airfoil 12.

The body 32 may be made from a metal alloy of the desired composition. One non-limiting example of an alloy suitable for construction of the body 32 is a nickel-based alloy commercially available as INCONEL 718 or IN718.

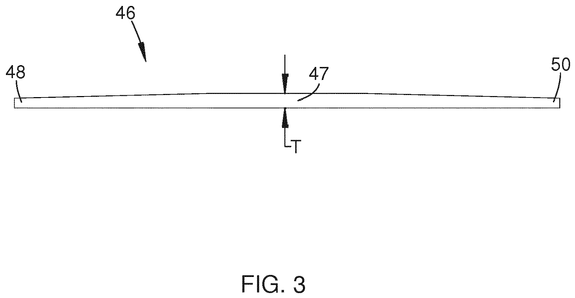

The body 32 may be made, for example, starting from flat sheet stock 46, as shown in FIG. 3. The sheet stock 46 may be machined or otherwise formed with a central portion 47 having a thickness "T" equal or close to an axial length "A" of the nose 36, and tapered distal ends 48, 50 corresponding to the wings 38, 40. The body 32 may then be formed by bending the sheet stock 46 using conventional equipment such as a press brake or hydro forming machine. In contrast to prior art leading edge guards in which the nose is a solid section of considerable axial thickness, the axial dimension A of the nose 36 may be made sufficiently small to enable the use of sheet stock with conventional forming methods.

The energy absorbing structure 34 is disposed in the cavity 44. As used herein, the term "energy absorbing" refers to any structure configured to reduce a peak impact force by dissipating the impact energy and/or converting it to another form of energy (such as thermal energy). Nonlimiting examples of energy absorbing materials include solid materials with viscous properties, and cellular structures of otherwise rigid elastic materials such as metals, for example configurations similar to a honeycomb. For purposes of comparison, in general, a monolithic, nonporous metallic structure would not be considered "energy absorbing".

In the illustrated example, the energy absorbing structure 34 comprises a plurality of tubes 52 packed into the cavity 44. The long axes of the tubes 52 run generally in the spanwise direction of the airfoil 12, that is, from root 18 to tip 20. It will be understood that the airfoil 12 may incorporate features such as "twist", i.e. successive airfoil sections rotated relative to each other, or "bow", i.e. a non-linear airfoil stacking axis. The tubes 52 may incorporate curvature as necessary follow the path of any non-linear shaping of the airfoil 12.

The tubes 52 may be of varying diameters and wall thicknesses to efficiently pack into the cavity 44 and to provide a preferred combination of energy absorption capability and low weight.

The tubes 52 may be made from various materials, such as metal alloys, polymers, ceramics, or composites of those materials. For example, the tubes 52 may be made by a conventional hot extrusion process. A non-limiting example of an alloy suitable for construction of the tubes 52 is a nickel-based alloy commercially available as INCONEL 718 or IN718.

The tubes 52 may be disposed in direct contact with each other, or they may be spaced apart. They may be bonded to each other, for example using a welding or brazing process. Any voids between tubes 52 may be left open, or may be filled with a material such as an adhesive. The tubes 52 may be assembled as a single pack or bundle and then mated to the airfoil 12 along with the body 36.

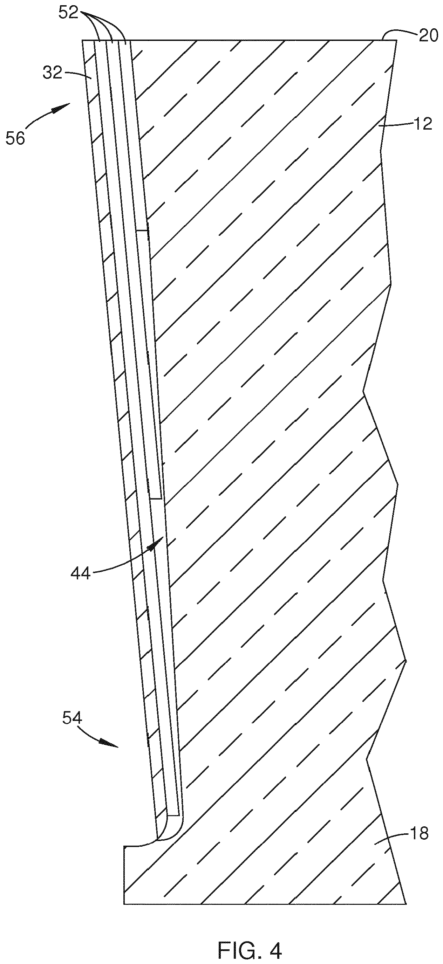

The number and distribution of tubes 52 may vary over the span of the airfoil 12. For example, in the example shown in FIG. 4, an inboard portion 54 of the airfoil 12 includes a single tube or row of tubes 52, while an outboard portion 56 of the airfoil 56 includes several tubes or rows of tubes 52. This is consistent with the principle that the outboard portion 56 of the airfoil 12 operates at a greater velocity than the inboard portion 54 (for a given rotor speed) and therefore has greater kinetic energy to be dissipated in the event of impact. Selectively placing a larger amount of energy absorbing material where most needed provides impact protection in an efficient manner.

Optionally, the leading edge guard 30 or portions thereof may be part of a single unitary, one-piece, or monolithic component, and may be manufactured using a manufacturing process which involves layer-by-layer construction or additive fabrication (as opposed to material removal as with conventional machining processes). Such processes may be referred to as "rapid manufacturing processes" and/or "additive manufacturing processes," with the term "additive manufacturing process" being the term used herein to refer generally to such processes. Additive manufacturing processes include, but are not limited to: Direct Metal Laser Melting (DMLM), Laser Net Shape Manufacturing (LNSM), electron beam sintering, Selective Laser Sintering (SLS), 3D printing, such as by inkjets and laserjets, Sterolithography (SLS), Electron Beam Melting (EBM), Laser Engineered Net Shaping (LENS), and Direct Metal Deposition (DMD).

The apparatus described herein has several advantages over prior art leading edge guards. It uses a simple wrap for the external leading edge surface, combined with an energy absorbing structure inserted for added stiffness and increased impact capability. This configuration will reduce part cost in that the external skin can be formed from general sheet stock and the insert tubes can be simple hot formed thin wall tubes. The increased overall stiffness of the leading edge guard 30 (as compared to a prior art solid leading edge guard) may allow for overall thinning of the airfoil 12, resulting in increased airfoil aerodynamic efficiency.

The foregoing has described an airfoil with a leading edge guard. All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends any novel one, or any novel combination, of the features disclosed in this specification (including any accompanying potential points of novelty, abstract and drawings), or to any novel one, or any novel combination, of the steps of any method or process so disclosed.

Various aspects and embodiments of the present inventions are defined in the following clauses:
1. An edge guard apparatus for an airfoil, comprising:
   a body having a nose with spaced-apart first and second wings extending therefrom, the body defining a cavity between the first and second wings; and
   an energy absorbing structure disposed in the cavity.
2. The apparatus of clause 1 wherein the energy absorbing structure comprises a cellular structure.
3. The apparatus of clause 1 wherein the energy absorbing structure comprises a plurality of tubes arranged in a side-by-side configuration.
4. The apparatus of clause 2 wherein the tubes extend in a spanwise direction of the body.
5. The apparatus of clause 3 wherein at least one of the tubes extends over only a portion of a span of the body.
6. The apparatus of clause 3 wherein a greater number of tubes are disposed near a first end of the body and a fewer number of tubes are disposed near a second end of the body.
7. The apparatus of clause 3 where at least one of the tubes is bonded to another one of the tubes.
8. The apparatus of clause 3 wherein the tubes are separated by voids, the voids being filled with an adhesive.
9. The apparatus of clause 3 wherein the tubes comprise a metal alloy.
10. The apparatus of clause 1 wherein the body comprises a sheet stock material.
11. An airfoil apparatus, comprising:
   an airfoil having convex and concave sides extending between a leading edge and a trailing edge;
   a body having a nose with spaced-apart first and second wings extending therefrom, the body defining, in cooperation with the leading edge of the airfoil, a cavity; and
   an energy absorbing structure disposed in the cavity.
12. The apparatus of clause 11 wherein the energy absorbing structure comprises a cellular structure.
13. The apparatus of clause 11 wherein the energy absorbing structure comprises a plurality of tubes arranged in a side-by-side configuration.
14. The apparatus of clause 12 wherein the tubes extend in a spanwise direction of the airfoil.
15. The apparatus of clause 13 wherein at least one of the tubes extends over only a portion of a span of the airfoil.
16. The apparatus of clause 13 wherein a greater number of tubes are disposed near a tip of the airfoil and a fewer number of tubes are disposed near a root of the airfoil.
17. The apparatus of clause 13 where at least one of the tubes is bonded to another one of the tubes.
18. The apparatus of clause 13 wherein the tubes are separated by voids, the voids being filled with an adhesive.
19. The apparatus of clause 13 wherein the airfoil comprises a composite material and at least one of the body and the tubes comprise a metal alloy.

## Claims

1. An edge guard apparatus (30) for an airfoil, comprising:
a body (32) having a nose (36) with spaced-apart first and second wings (38, 40) extending therefrom, the body (32) defining a cavity (44) between the first and second wings (38, 40); and
an energy absorbing structure (34) disposed in the cavity (44).

2. The apparatus (30) of claim 1, wherein the energy absorbing structure (34) comprises a cellular structure.

3. The apparatus (30) of claim 1, wherein the energy absorbing structure (34) comprises a plurality of tubes (52) arranged in a side-by-side configuration.

4. The apparatus (30) of claim 3, wherein the tubes (52) extend in a spanwise direction of the body (32).

5. The apparatus (30) of claim 3, wherein at least one of the tubes (52) extends over only a portion of a span of the body (32).

6. The apparatus (30) of anyone of claims 3 to 5, wherein a greater number of tubes (52) are disposed near a first end of the body (32) and a fewer number of tubes (52) are disposed near a second end of the body (32).

7. The apparatus (30) of anyone of claims 3 to 5, where at least one of the tubes (52) is bonded to another one of the tubes (52).

8. The apparatus (30) of anyone of claims 3 to 6, wherein the tubes (52) are separated by voids, the voids being filled with an adhesive.

9. The apparatus (30) of anyone of claims 3 to 8, wherein the tubes (52) comprise a metal alloy.

10. The apparatus of anyone of claims 1 to 9, further comprising an airfoil (12) having convex and concave sides extending between a leading edge (22) and a trailing edge (24), wherein the first and second wings (38, 40) are attached to the airfoil (12) such that the leading edge (22) defines a portion of the cavity (44).
